# EUROPÄISCHE PATENTANMELDUNG

(11) **EP 1 924 070 A1**
(43) Veröffentlichungstag der Anmeldung: **21.05.2008**
(21) Anmeldenummer: 07021891.2
(22) Anmeldetag: 12.11.2007
(51) Int. Cl.: H04M 3/428, H04M 3/533

(54) **Anklopfen durch Sprachnachricht, die vom Anrufer auf die Mailbox des Angerufenen aufgesprochen wird**

(30) Priorität: 17.11.2006 DE 102006054283
(71) Anmelder: Deutsche Telekom AG, 53113 Bonn (DE)
(72) Erfinder: Daussmann, Frank, 67454 Haßloch (DE); Trinkel, Marian, 52372 Kreuzau OT Untermaubach (DE)

(57) **Zusammenfassung**

Die Erfindung betrifft ein Verfahren zur Behandlung eines Anruft wenn der Angerufene belegt ist. Im Stand der Technik wird einem, sich augenblicklich in einem Gespräch befindenden, Teilnehmer ein Anklopfsignal zugespielt, wenn ein weiterer Anruf eingeht. Der Angerufene kann dann entscheiden ob er den Anruf entgegennimmt und somit das bestehende Gespräch unterbricht oder das aktuelle Gespräch fortführt und somit den weiteren Anruf abweist. Dies hat den Nachteil, dass der Angerufene ohne weitere Hilfe entscheiden muss, ob er den weiteren Anruf entgegennimmt. Dieser Nachteil wird in der vorliegenden Anmeldung dadurch überwunden, dass, anstatt dem üblichen Anklopfsignal, dem Angerufenen (B) eine Nachricht zugespielt wird, die insbesondere den Namen des Anrufers umfasst. Diese Nachricht wird vorzugsweise dadurch erzeugt, dass der Anrufer (A) an eine Mailbox (DB) des Angerufenen weitergeleitet wird und dort aufgefordert wird, seinen Namen aufzusprechen, der anschliessend, noch während des aktuellen Gesprächs, dem Angerufenen zugespielt wird (K3).

## Beschreibung

Die Erfindung betrifft ein Kommunikationsverfahren, bei dem ein erster Kommunikationsteilnehmer einen zweiten Kommunikationsteilnehmer über ein Telekommunikationsnetzwerk anruft, wobei ein Kommunikationskanal zum zweiten Kommunikationsteilnehmer belegt ist. Die Erfindung betrifft weiterhin ein Telekommunikationssystem, welches ein Telekommunikationsnetzwerk umfasst, insbesondere zur Durchführung des erfindungsgemäßen Verfahrens.

Es ist im Stand der Technik bekannt, dass es immer wieder zu Situationen kommt, bei denen ein erster Kommunikationsteilnehmer einen zweiten Kommunikationsteilnehmer über ein Telekommunikationsnetzwerk, z.B. ein analoges oder digitales Telefonnetzwerk oder auch das Internet, anruft, wobei eine Vermittlung zum zweiten Kommunikationsteilnehmer nicht möglich ist, weil ein Kommunikationskanal zu dem zweiten Kommunikationsteilnehmer belegt ist.

Beispielsweise passiert dies regelmäßig, wenn der zweite angerufene Kommunikationsteilnehmer selbst bereits ein Gespräch führt. In diesen Situationen ist es im Stand der Technik üblich, dass beispielsweise der anrufende erste Kommunikationsteilnehmer ein Besetztzeichen erhält. In alternativen bekannten Ausgestaltungen kann es auch vorgesehen sein, dass dem zweiten Kommunikationsteilnehmer ein Anklopfsignal zugespielt wird, so dass dieser eine Information darüber erhält, dass aktuell ein anderer Kommunikationsteilnehmer versucht, ihn anzurufen. Der zweite angerufene Kommunikationsteilnehmer kann sodann entscheiden, ob er sein aktuelles Gespräch unterbricht und den Anruf des anrufenden ersten Kommunikationsteilnehmers entgegennimmt.

Es ist weiterhin im Stand der Technik bekannt, dass ein erster Kommunikationsteilnehmer im Falle einer Belegung des Kommunikationskanals zu einem zweiten Kommunikationsteilnehmer mit einer Mailbox des zweiten Kommunikationsteilnehmers, z.B. mit einem netzinternen Anrufbeantworter verbunden wird, so dass der erste Kommunikationsteilnehmer dort eine Nachricht hinterlassen kann, um so den zweiten Kommunikationsteilnehmer darüber zu informieren, dass ein Anruf vorlag und um gegebenenfalls um Rückruf zu bitten.

Insbesondere bei der im Stand der Technik bekannten vorgenannten Ausführung der Erzeugung eines Anklopfsignals muss der angerufene zweite Kommunikationsteilnehmer ohne weitere Hilfe entscheiden, ob er den zusätzlichen Anruf entgegennimmt und beispielsweise den aktuellen Anruf abbricht oder zumindest in eine Warteschleife schickt.

Aufgabe der Erfindung ist es, ein Kommunikationsverfahren der vorgenannten gattungsgemäßen Art bereitzustellen, mittels welchem dem zweiten angerufenen Kommunikationsteilnehmer eine Hilfe bereitgestellt wird, um zu entscheiden, ob er die aktuell durchgeführte Kommunikation, die zu einer aktuellen Kanalbelegung führt, zugunsten des anrufenden Telekommunikationsteilnehmers unterbrechen möchte oder ob er die aktuelle Kommunikation fortführt und somit den weiteren Anruf des ersten Telekömmunikationsteilnehmers abweist.

Gelöst wird diese Aufgabe erfindungsgemäß dadurch, dass dem zweiten Kommunikationsteilnehmer der Anruf des ersten Kommunikationsteilnehmers während der Belegung des Kommunikationskanals signalisiert wird durch eine Nachricht des ersten Kommunikationsteilnehmers. Bei einer solchen Nachricht kann es sich z.B. in einer bevorzugten Ausführung um eine Sprachnachricht handeln, insbesondere menschlicher Art - also real von einer Person gesprochen - oder auch synthetischer Art, insbesondere also durch eine Maschine gesprochen. Ebenso kann es vorgesehen sein, dass es sich bei der Nachricht um eine Textnachricht und/oder eine Bildnachricht (z.B. Piktogramm) handelt, ggfs auch von mehreren (bewegten) Bildern, z.B. auch von Videos.

Realisiert werden kann dies beispielsweise mit einem Kommunikationssystem, welches ein Kommunikationsnetzwerk umfasst, beispielsweise also wenigstens eine Vermittlungsstelle sowie Netzwerkendgeräte, denen insbesondere jeweils eine Netzwerkkennung zugeordnet ist, mittels dem einem zweiten Kommunikationsteilnehmer der Anruf eines ersten Kommunikationsteilnehmers während der Belegung eines Kommunikationskanals zum zweiten Kommunikationsteilnehmer signalisierbar ist durch eine Nachricht/Mitteilung des ersten Kommunikationsteilnehmers. Dabei kann es sich bei dem Kommunikationsnetzwerk z.B. um ein klassisches Vermittlungssystem handeln ebenso wie um ein auf das Internet gestütztes Netzwerk, welches die sogenannte IP-Telefonie (z.B. VoIP) oder IP-Bildtelefonie unterstützt.

Im Folgenden wird unter dem ersten Kommunikationsteilnehmer der anrufende und unter dem zweiten Kommunikationsteilnehmer der vom ersten angerufene Teilnehmer verstanden. Unter einem weiteren bzw. dritten Kommunikationsteilnehmer / - partner wird die Partei bzw. der Dienst verstanden, mit welcher / welchem der zweite Kommunikationsteilnehmer eine Kommunikation durchführt, was zu der Kanalbelegung führt. Hierbei muss es sich nicht zwingend um eine Person handeln. Auch durch die Inanspruchnahme eines Telekommunikationsdienstes (z.B. Email, Internet) kann es zu einer Kanalbelegung kommen.

Das erfindungsgemäße Verfahren bzw. Kommunikationssystem hat gegenüber den im Stand der Technik bekannten Verfahren und Systemen den besonderen Vorteil, dass durch die Zuspielung einer Nachricht der angerufene zweite Kommunikationsteilnehmer eine Entscheidungshilfe darüber erhält, ob er die bestehende durchgeführte Kommunikation zumindest zeitweise unterbricht und den Anrufwunsch des ersten Kommunikationsteilnehmers entgegennimmt oder gegebenenfalls abwehrt, beispielsweise durch passives Nichtstun oder eine aktive Abweisung.

Durch die Tatsache, dass die Möglichkeit besteht, einem angerufenen zweiten Kommunikationsteilnehmer während der Belegung des Kommunikationskanals, also während dieser aktiv eine Kommunikation durchführt, eine Nachricht vom ersten Kommunikationsteilnehmer zukommen zu lassen, erhält dieser die Möglichkeit, anhand der Nachricht festzustellen, ob er die aktuelle Kommunikation zumindest zeitweise unterbrechen möchte.

So kann er anhand der Nachricht des ersten Kommunikationsteilnehmers beispielsweise feststellen, um welche Person es sich bei dem ersten Kommunikationsteilnehmer handelt und so eine Bewertung vornehmen, ob er gerne mit dieser Person sprechen möchte. Handelt es sich beispielsweise um eine störende Person, so kann der angerufene zweite Kommunikationsteilnehmer entscheiden, dass er den Anruf des ersten Kommunikationsteilnehmers nicht annimmt. Handelt es sich hingegen um einen wichtigen Kommunikationsteilnehmer, so kann der zweite angerufene Kommunikationsteilnehmer anhand der Nachricht auf einfache Art und Weise entscheiden, dass er den Anruf entgegennimmt und die bestehende Kommunikation z.B. zeitweise oder auch dauerhaft abbricht.

So kann es beispielsweise vorgesehen sein, dass in der Nachricht eine persönliche Mitteilung umfasst ist, wie beispielsweise der Name des ersten Kommunikationsteilnehmers. Insbesondere die Namensnennung erleichtert die Entscheidungsfindung seitens des zweiten angerufenen Kommunikationsteilnehmers. Insbesondere bei Sprachnachrichten bedarf es oftmals nur einer beliebigen Sprachnachricht, um die Entscheidung zu finden, da oftmals bereits aus der Sprachnachricht an sich und schon ohne eine Namensnennung die Identität des ersten Kommunikationsteilnehmers abgeleitet werden kann, insbesondere wenn die beiden Kommunikationsteilnehmer einander bekannt sind.

In einer bevorzugten Ausführung des erfindungsgemäßen Verfahrens, insbesondere wenn es sich bei der Kommunikation um eine Sprachkommunikation handelt, kann es vorgesehen sein, dass der erste Kommunikationsteilnehmer wegen der Belegung des Kommunikationskanals an eine Mailbox des zweiten Kommunikationsteilnehmers vermittelt wird. So kann es bei dieser Vermittlung beispielsweise vorgesehen sein, dass der erste Kommunikationsteilnehmer, der den Anruf tätigt, zunächst eine Ansage der Mailbox des zweiten Kommunikationsteilnehmers erhält und sodann die Möglichkeit eingeräumt bekommt, eine Nachricht auf die Mailbox aufzusprechen.

Erfindungsgemäß kann es bei dieser Ausführung sodann vorgesehen sein, dass während des Aufsprechens einer Nachricht auf die Mailbox durch den Kommunikationsteilnehmer diese gesprochene Nachricht dem zweiten Kommunikationsteilnehmer insbesondere zeitgleich zugespielt wird. Gegebenenfalls kann es auch vorgesehen sein, dass die Nachricht zunächst aufgezeichnet und sodann die aufgezeichnete Nachricht dem zweiten Kommunikationsteilnehmer als Sprachnachricht zugespielt wird.

Hierbei kann es insgesamt bevorzugt vorgesehen sein, dass die Zuspielung einer Nachricht nur für den zweiten Kommunikationsteilnehmer wahrnehmbar ist, also beispielsweise nicht für einen weiteren Kommunikationstellnehmer, mit dem der zweite Kommunikationsteilnehmer aktuell gerade kommuniziert, insbesondere telefoniert. So wird der weitere Kommunikationsteilnehmer durch die Zuspielung zum einen nicht gestört und zum anderen erfährt er keine gegebenenfalls persönlichen und nur für den zweiten Kommunikationsteilnehmer vorgesehene Nachrichten.

Insbesondere sofern die Kanalbelegung bei dem zweiten angerufenen Kommunikationsteilnehmer auf einer nicht sprachbasierten Kommunikation beruht kann es auch vorgesehen sein, dass der zweite Kommunikationsteilnehmer eine Textnachricht und/oder Bildnachricht zugespielt bekommt. Eine solche Nachricht kann z.B. auch gesprochenen Worten des ersten Kommunikationsteilnehmers durch eine Wandlung erstellt werden.

Ebenso kann es sich bei allen möglichen Arten von Nachrichten um solche handeln, die bei dem Anrufversuch des ersten Teilnehmers zum zweiten Teilnehmer aktuell erstellt, z.B. gesprochen werden oder auch um solche, die bereits gespeichert sind, z.B. im Kommunikationssystem bzw. -netzwerk. Eine solche, z.B. in einer netzinternen Datenbank gespeicherte Nachricht kann z.B. dem ersten Kommunikationsteilnehmer anhand dessen Netzwerkkennung zugeordnet werden und dann dem zweiten Kommunikationsteilnehmer zugespielt werden. Dabei kann es vorgesehen sein, dass eine gespeicherte Nachricht vom ersten oder auch vom zweiten Telekommunikationsteilnehmer erstellt wurde. Z.B. kann der zweite Kommunikationsteilnehmer hierdurch bestimmen, welche Nachricht er zugespielt bekommt, wenn eine bestimmte Person anruft.

Eine Möglichkeit der technischen Realisierung der Zuspielung kann beispielsweise darin gesehen werden, dass durch das Telekommunikationsnetzwerk, insbesondere durch eine Vermittlungsstelle oder eine die Vermittlungsstelle steuernde Stelle eine Zuspielung der Nachricht dann erfolgt, wenn ein Zugriff auf eine Datenbank der Mailbox des zweiten Kommunikationsteilnehmers und/oder (insbesondere gleichzeitig) auch eine Belegung des Kommunikationskanals zum zweiten Kommunikationsteilnehmer festgestellt wird.

Ein Zugriff auf eine Datenbank der Mailbox wird immer dann detektierbar sein, wenn ein erster Kommunikationsteilnehmer bei der Belegung eines Kommunikationskanals zum zweiten Kommunikationsteilnehmer mit der Mailbox, also insoweit mit der Datenbank der Mailbox, verbunden wird, um hier eine Nachricht zu hinterlassen. Diese Verbindung stellt einen Zugriff zur Datenbank dar, der auswertbar ist, um sodann bei einem festgestellten Zugriff und insbesondere der Tatsache, dass der Kommunikationskanal zum zweiten Kommunikationsteilnehmer belegt ist, die Zuspielung durchzuführen.

Alternativ kann es auch vorgesehen sein, dass der erste Kommunikationsteilnehmer wegen der Belegung des Kommunikationskanals durch das Telekommunikationsnetzwerk, also insbesondere durch eine Vermittlungsstelle oder eine die Vermittlungsstelle steuernde Stelle aufgefordert wird, eine Nachricht abzugeben, also z.B. zu sprechen, insbesondere den Namen, wonach die Nachricht dem zweiten Kommunikationsteilnehmer zugespielt wird.

Hier erfolgt somit keine Aufzeichnung der Nachricht auf einer Mailbox des zweiten Kommunikationsteilnehmers, sondern nur eine interne Handhabung des Anrufwunsches des ersten Kommunikationsteilnehmers, beispielsweise durch ein Sprachdialogsystem/Spracherkennungssystem, welches eine Nachricht des ersten Kommunikationsteilnehmers ggfs. speichert und dem zweiten Kommunikationsteilnehmer während der Belegung des Kommunikationskanals zuspielt.

Hierbei kann gegebenenfalls die Nachricht zuvor gespeichert, der erste Kommunikationsteilnehmer zum Abwarten aufgefordert werden und während der Wartezeit des ersten Kommunikationsteilnehmers die Zuspielung erfolgen.

Gegebenenfalls kann es auch vorgesehen sein, dass zeitgleich während der erste Kommunikationsteilnehmer spricht, die, insbesondere gesprochene, Nachricht zugespielt wird an den zweiten Kommunikationsteilnehmer. So kann hierdurch eine einseitige Lifeverbindung zwischen dem ersten und zweiten Kommunikationsteilnehmer hergestellt werden, bei der der erste Kommunikationsteilnehmer seine Nachricht an den zweiten Kommunikationsteilnehmer übermittelt, ohne dass dieser hierauf unmittelbar erwidern kann.

Bezüglich sämtlicher möglicher Ausführungen des erfindungsgemäßen Kommunikationsverfahrens kann es weiterhin vorgesehen sein, dass der angerufene zweite Kommunikationsteilnehmer während und/oder nach der Zuspielung der Nachricht den Anruf annimmt.

Beispielsweise kann das Kommunikationssystem eine maximale Zeitspanne für das Abgeben, insbesondere das Sprechen einer Nachricht bereitstellen, wobei während des Laufens der zur Verfügung stehenden Zeit die Möglichkeit besteht, den Anruf entgegen zu nehmen. Hierbei kann es ergänzend vorgesehen sein, dass das Ablaufen der Zeit zusätzlich wenigstens einem der beiden Kommunikationsteilnehmer, bevorzugt beiden durch ein Signal, z.B. Tonsignal angezeigt wird.

Es kann sodann vorgesehen sein, dass die bisherige aktuelle Kommunikation zumindest zeitweise unterbrochen wird, d.h. entweder vollständig oder aber für eine Zeit der bisherige Kommunikationspartner in eine Warteschleife geschickt wird. Die Übernahme bzw. die Annahme des Anrufs des ersten Kommunikationsteilnehmers kann beispielsweise dadurch erfolgen, dass der angerufene zweite Kommunikationsteilnehmer wenigstens eine Taste an seinem Kommunikationsgerät, z.B. an seinem Mobilfunktelefon oder einem Festnetztelefon drückt oder aber wenigstens einen Sprachbefehl gibt.

Hierbei kann es vorgesehen sein, dass der bisherige Kommunikationspartner zunächst entweder durch den angerufenen zweiten Kommunikationsteilnehmer oder aber auch systemintern darüber informiert wird, dass ein Anruf eines anderen Telekommunikationsteilnehmers entgegengenommen wird.

In einer anderen Ausführung kann es auch vorgesehen sein, dass der angerufene zweite Kommunikationsteilnehmer den Anruf nicht entgegennimmt und nach Beendigung der Belegung des Kommunikationskanals entweder automatisch oder auf Wunsch des zweiten Kommunikationsteilnehmers ein Rückruf generiert wird zum ersten Kommunikationsteilnehmer, der ursprünglich den Anrufversuch vorgenommen hatte, welcher nicht zum Ziel führte. Z.B. kann der zweite Kommunikationsteilnehmer durch einen automatisierten Sprachdialog und/oder Spracherkennung, der/die vom Kommunikationssystem generiert wird gefragt werden, ob er einen Anruf zu dem bislang abgewiesenen Anrufer durchführen möchte. Sollte der zweite Kommunikationsteilnehmer sein bisheriges Gespräch beendet haben, so kann es dafür vorgesehen sein, dass er einen automatischen Anruf eines Sprachdialogsystems / Spracherkennungssystems erhält, welches diese Frage stellt. Alternativ kann der zweite Kommunikationsteilnehmer den Wunsch z.B. auch durch das Drücken einer bestimmten Taste initiieren.

Es kann bei allen Ausführung auch vorgesehen sein, dass der zweite Kommunikationsteilnehmer, der den Anruf eines ersten Kommunikationsteilnehmers während der Kanalbelegung nicht entgegen genommen hat, während der Dauer der Kanalbelegung, also z.B. während eines Gesprächs mit einem anderen Kommunikationspartner ggfs. mehrfach, z.B. periodisch durch eine Ansage oder auch nichtsprachliche, z.B. textuelle oder bildliche Mitteilung erinnert wird, dass es einen Versuch gegeben hat, ihn zu erreichen. Auch eine solche Ansage / Mitteilung kann vom Kommunikationssystem, z.B. der Vermittlungsstelle generiert und zugespielt werden, insbesondere so, dass nur der zweite Kommunikationsteilnehmer diese Ansage / Mitteilung erhält.

Ein Rückruf bzw. eine Erkennung des ersten anrufenden Kommunikationsteilnehmers kann insbesondere erfolgen anhand einer gespeicherten Netzwerkkennung des ersten Kommunikationsteilnehmers, die beispielsweise durch dessen CLI (call line identity) eines Festnetztelefons oder beispielsweise durch das HLR (home location register) eines Mobiltelefons oder auch durch eine IP-Adresse (Internet-Protokoll-Adresse) gegeben sein kann. Ebenso kann eine Netzwerkkennung durch jegliche andere Identifikation eines Telekommunikationsgerätes innerhalb eines Telekommunikationsnetzwerkes gegeben sein, wie beispielsweise eine Gerätenummer oder ähnliches.

In einer Weiterbildung kann es auch vorgesehen sein, einem anrufenden ersten Kommunikationsteilnehmer eine Priorität zuzuordnen, z.B. durch einen Sprachprint, eine Schlüsselworterkennung (keywords), eine Sprecherverifikation, eine Sprecheridentifikation, etc. Es kann vorgesehen sein, dass die zugeordnete Priorität dem angerufenen zweiten Kommunikationsteilnehmer mitgeteilt wird, insbesondere zusammen mit der zugespielten Nachricht und/oder dass die Generierung eines Rückrufes in Abhängigkeit der zugewiesenen Priorität erfolgt.

Bezogen auf sämtliche Ausführungen kann es weiterhin vorgesehen sein, dass eine Belegung des Kommunikationskanals zum zweiten Kommunikationsteilnehmer z.B. dann gegeben ist, wenn dieser aktuell eine Kommunikation, beispielsweise eine Sprachkommunikation mit einem dritten Kommunikationsteilnehmer /-partner durchführt. Auch die Inanspruchnahme eines anderen Kommunikationsdienstes kann zu einer Kanalbelegung führen, wie z.B. das Surfen im Internet.

Es kann ebenso vorgesehen sein, dass eine Belegung des Kommunikationskanals zum zweiten Kommunikationsteilnehmer auch dann im Sinne der Erfindung gegeben ist, wenn der zweite Kommunikationsteilnehmer beispielsweise aktuell seine eigene Mailbox abfragt und somit mit der Datenbank seiner Mailbox verbunden ist. Auch in einer solchen Situation, wenn ein zweiter Kommunikationsteilnehmer somit seine eigene Mailbox abfragt, um in Erfahrung zu bringen, welche Nachrichten hinterlassen wurden, kann ein erster Kommunikationsteilnehmer den zweiten Kommunikationsteilnehmer anrufen, woraufhin dieser erfindungsgemäß mit dem genannten Verfahren eine Nachricht, z.B. Sprachmitteilung zugespielt bekommt und noch während der Abfrage seiner Mailbox eine Annahme des Anrufs durchführen kann oder aber diesen Anruf verweigert.

Zu sämtlichen vorgenannten Ausführungen des erfindungsgemäßen Verfahrens bzw. des erfindungsgemäßen Kommunikationssystems, welches in der Lage ist, dieses Verfahren durchzuführen, kann es vorgesehen sein, dass die Durchführung der Zuspielung einer Nachricht entweder sofort automatisch im Augenblick des Anrufversuches durch den ersten Kommunikationsteilnehmer erfolgt oder beispielsweise erst dann, wenn dies durch den angerufenen zweiten Kommunikationsteilnehmer angefordert wird. Die Nachricht kann als Sprachnachricht zugespielt werden, z.B. in den Lautsprecher eines Telefons oder auch als Text oder Bildnachricht oder SMS oder Laufschrift auf einem Bildschirm oder beliebiger Anzeigeeinheit. Hierbei kann eine Konvertierung von einer Sprachnachricht in eine Textnachricht vorgesehen sein. Eine Sprachnachricht und/oder Textnachricht kann ebenso in eine andere Sprache übersetzte werden.

Es kann weiterhin vorgesehen sein, dass der zweite Kommunikationsteilnehmer, wie im Stand der Technik bekannt, zunächst ein Anklopfsignal oder ein anderes Signal erhält, welches den Anrufversuch signalisiert, ohne weitere Information über den Anrufer.

Es kann sodann vorgesehen sein, dass der zweite Kommunikationsteilnehmer, der dieses erste Signal erhält, eine Mitteilung an das Telekommunikationsnetzwerk absenden kann, z.B. durch Drücken einer Taste oder wenigstens einen Sprachbefehl, um eine Nachricht der erfindungsgemäßen Art vom ersten Kommunikationsteilnehmer anzufordern. Z.B. kann es nach dieser Anforderung sodann vorgesehen sein, dass wie eingangs genannt automatisch ein Sprachdialogsystem einen Dialog mit dem ersten Kommunikationsteilnehmer beginnt, um eine Nachricht, insbesondere eine Sprachnachricht zu erbitten oder aber, dass mit der Anforderung durch den zweiten Kommunikationsteilnehmer automatisch die Übertragung der Nachricht erfolgt, die der erste Kommunikationsteilnehmer in diesem Augenblick bereits auf eine Mailbox des zweiten Kommunikationsteilnehmers aufspricht, zu der dieser zwischenzeitlich verbunden wurde.

Eine Belegung eines Kommunikationskanals zum zweiten Kommunikationsteilnehmer kann nicht nur durch die vorgenannten Beispiele, wie die Durchführung einer Sprachkommunikation mit einem weiteren Teilnehmer oder aber eine Mailboxabfrage gegeben sein, sondern grundsätzlich durch jeglichen kommunikationsgestützten Dienst, den ein zweiter Kommunikationsteilnehmer in dem Telekommunikationsnetzwerk in Anspruch nehmen kann.

Beispielsweise kann ein zweiter Telekommunikationsteilnehmer auch aktuell mit einem Kommunikationsgerät (z.B. Telefon) einen Nicht-Sprachdienst nutzen, z.B. eine Verbindung in das Internet aufgebaut haben, wobei es sodann vorgesehen sein kann, dass eine zugespielte Nachricht über eine Lautsprech- bzw. sogenannte Mithör- oder Freisprechfunktion des aktuell genutzten Kommunikationsgeräts oder aber als Text- / Bildnachricht auf einer aktuelle genutzten Anzeigeeinheit signalisiert wird, insbesondere da bei der Inanspruchnahme eines solchen Nicht-Sprach-Dienstes üblicherweise der zweite Telekommunikationsteilnehmer den Hörer seines Telefons nicht ans Ohr hält und somit eine nur leise, in üblicher Art und Weise in die Hörermuschel abgegebene Sprachnachricht nicht wahrnehmen würde.

Insbesondere Mobiltelefone bieten die Möglichkeit, neben des normalen Hörens über einen Lautsprecher am Ohr auch eine "Lauthören" bzw. "Mithören"-Funktion einzuschalten, die häufig auch im Rahmen einer Freisprechfunktion mit dem Mobiltelefon möglich ist, so dass ein Telekommunikationsteilnehmer auch auf diese Art und Weise laut eine Sprachmitteilung eines anrufenden ersten Kommunikationsteilnehmers empfangen kann, selbst wenn der zweite Kommunikationsteilnehmer aktuell keinen Sprachdienst, sondern einen anderen, z.B. einen rein datenbasierten Dienst in Anspruch nimmt.

Bei allen Ausführungen kann es vorgesehen sein, dass eine Zuspielung der Nachricht an den Kommunikationskanal erfolgt, den der zweite angerufene Kommunikationsteilnehmer aktuell nutzt, der also durch eine Kommunikation des zweiten Kommunikationsteilnehmers belegt ist, selbst wenn der Anrufversuch zu einem anderen Kommunikationskanal erfolgt und der angerufene Teilnehmer grundsätzlich die Möglichkeit hätte an dem anderen Kanal den Anruf entgegenzunehmen. In jedem Fall wird bei dieser Ausführung sichergestellt, dass der angerufene Teilnehmer eine Nachricht über den Anruf erhält und zu einer Entscheidung kommen kann, ob er den Anruf entgegennimmt. Ggfs. kann es dabei vorgesehen sein, dass der zweite angerufene Teilnehmer eine Anrufweiterleitung initiieren kann, von dem Kommunikationskanal, den der Anrufer nutzt zu dem Kommunikationskanal, den der Angerufene aktuell nutzt.

Ausführungsbeispiele der Erfindung sind in den nachfolgenden Figuren in der Übersicht dargestellt. Es zeigen:
- Figur 1: eine Belegung des Kommunikationskanals zu einem zweiten Kommunikationsteilnehmer wegen eines anderen Gesprächs
- Figur 2: eine Belegung des Kommunikationskanals aufgrund einer Mailboxabfrage

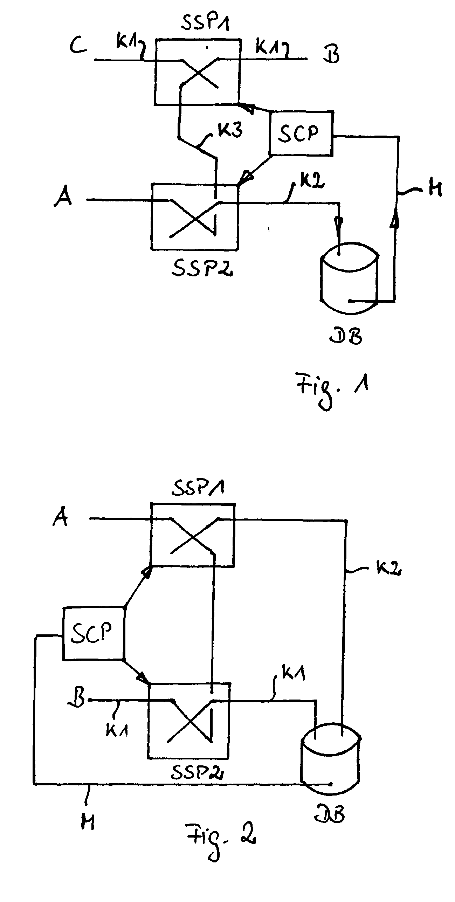

Die Figur 1 zeigt in schematischer Darstellung die Situation, bei der ein zweiter Telekommunikationsteilnehmer B aktuell mit einem dritten Telekommunikationsteilnehmer C über ein Telekommunikationsnetzwerk und hier insbesondere über eine Vermittlungsstelle SSP1 ein Sprachtelefonat führt. Über die Vermittlungsstelle SSP ist innerhalb des Telekommunikationsnetzes zwischen diesen beiden Teilnehmern B und C ein Kommunikationskanal K1 eröffnet und belegt.

In diesem Beispiel versucht weiterhin der erste Kommunikationsteilnehmer A insbesondere über dasselbe Telekommunikationsnetzwerk und hier über eine Vermittlungsstelle SSP2 eine Verbindung zu dem zweiten Telekommunikationsteilnehmer B aufzubauen, wobei jedoch der Vermittlungsstelle SSP2, insbesondere durch die Steuerstelle SCP (Service Control Point) eine Information darüber vorlegt, dass der Kommunikationskanal K1 zu dem zweiten Kommunikationsteilnehmer B belegt ist. Die Vermittlungsstelle SSP2 (Service Switching Point 2) wird somit die Kommunikation des eingehenden Anrufs von dem ersten Kommunikationsteilnehmer A an die Mailbox des Kommunikationsteilnehmers B über den Kanal K2 vermitteln und hierbei einen Zugang zu der Datenbank DB dieser Mailbox öffnen, so dass der erste Kommunikationsteilnehmer A eine Sprachnachricht auf dieser Datenbank DB hinterlassen kann.

Aufgrund des Zugriffs auf die Datenbank DB kann die Steuerstelle SCP die Benutzung der Datenbank über eine Meldung M feststellen und gleichzeitig aufgrund der Information, dass eine Kanalbelegung zu dem zweiten Kommunikationsteilnehmer B vorliegt, insbesondere eine Einwegkommunikation K3 zwischen dem ersten Kommunikationsteilnehmer A und dem zweiten Kommunikationsteilnehmer B herstellen, so dass während der durchgeführten Kommunikation zwischen B und C dem zweiten Kommunikationsteilnehmer B gleichzeitig auch die Nachricht von dem Kommunikationsteilnehmer A zugespielt wird, welche dieser in diesem Augenblick auf die Mailbox aufspricht.

Aufgrund dieser Zuspielung kann sodann der zweite Kommunikationsteilnehmer B entscheiden, ob er den Anruf entgegennimmt und beispielsweise den Kommunikationsteilnehmer C temporär in eine Warteschlange schickt oder den Kommunikationskanal K1 mit dem Teilnehmer C abbricht.

Die Figur 2 zeigt eine Situation, bei der der zweite Kommunikationsteilnehmer B über die Vermittlungsstelle SSP mit der Datenbank DB seiner Mailbox verbunden ist, um in diesem Augenblick gespeicherte Sprachnachrichten von anderen Telekommunikationsteilnehmern abzurufen und anzuhören.

Üblicherweise kann in einem solchen Augenblick ein erster Kommunikationsteilnehmer A keine Anrufverbindung zu dem Kommunikationsteilnehmer B erhalten, da der Kommunikationskanal K1 zu dem zweiten Kommunikationsteilnehmer B belegt ist durch die Benutzung der Mailbox. Auch hier kann es sodann vorgesehen sein, dass durch die Vermittlungsstelle SSP1 der erste Kommunikationsteilnehmer A eine Verbindung K2 zur Mailbox DB des zweiten Kommunikationsteilnehmers B erhält, um eine Nachricht aufzusprechen.

Die Steuerstelle SCP erhält somit wiederum eine Information M über den externen Zugriff auf die Mailboxdatenbank DB und kann die Vermittlungsstellen SSP1 und SSP2 derart ansteuern, dass eine Zuspielung der aktuell von dem Kommunikationsteilnehmer A auf die Mailbox DB aufgesprochenen Nachricht an den Kommunikationsteilnehmer B zeitgleich stattfindet. Dieser hört somit während des Abrufens von gespeicherten Nachrichten auch gleichzeitig die Nachricht, die in diesem Augenblick durch den Kommunikationsteilnehmer A auf die Mailbox aufgesprochen wird. Sodann kann der Kommunikationsteilnehmer B wiederum entscheiden, ob er den Anruf von dem Kommunikationsteilnehmer A annimmt oder abweist.

Die Ausführung des vorgenannten Verfahrens zeigen somit, dass durch die Zuspielung einer Sprachmitteilung auf die geschilderten Arten und Weisen die Möglichkeit besteht, einem angerufenen Kommunikationsteilnehmer mehr Entscheidungsspielraum zu geben, ob dieser einen Anruf während einer bestehenden anderen Kommunikation entgegennimmt oder diesen Anruf abweist.

Bezüglich sämtlicher Ausführungen dieser gesamten Erfindungsbeschreibung ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser gesamten Erfindungsbeschreibung sind als erfindungswesentlich einzustufen und beliebig miteinander kombinierbar oder in Alleinstellung einsetzbar.

## Patentansprüche

1. Kommunikationsverfahren bei dem ein erster Kommunikationsteilnehmer einen zweiten Kommunikationsteilnehmer über ein Telekommunikationsnetzwerk anruft, wobei ein Kommunikationskanal zum zweiten Kommunikationsteilnehmer belegt ist, **dadurch gekennzeichnet, dass** dem zweiten Kommunikationsteilnehmer (B) der Anruf des ersten Kommunikationsteilnehmers (A) während der Belegung des Kommunikationskanals (K1) signalisiert wird durch eine Nachricht des ersten Kommunikationsteilnehmers (A).

2. Verfahren nach Anspruch 1, **dadurch gekennzeichnet, dass** es sich bei der Nachricht um eine Sprachnachricht oder um eine Nachricht in Form von Text und/oder Bild und/oder Bildern handelt.

3. Verfahren nach einem der vorherigen Ansprüche, **dadurch gekennzeichnet, dass** der erste Kommunikationsteilnehmer (A) wegen der Belegung des Kommunikationskanals (K1) an eine Mailbox (DB) des zweiten Kommunikationsteilnehmers (B) vermittelt wird und während des Aufsprechens einer Nachricht auf die Mailbox (DB) die gesprochene Nachricht dem zweiten Kommunikationsteilnehmer (B) zugespielt wird.

4. Verfahren nach Anspruch 3, **dadurch gekennzeichnet, dass** die Zuspielung der Nachricht nur für den zweiten Kommunikationsteilnehmer (B) wahrnehmbar ist.

5. Verfahren nach einem der Ansprüche 3 oder 4, **dadurch gekennzeichnet, dass** durch das Telekommunikationsnetzwerk, insbesondere durch eine Vermittlungsstelle (SSP1, SSP2), eine Zuspielung der Nachricht erfolgt, wenn ein Zugriff auf eine Datenbank (DB) der Mailbox des zweiten Kommunikationsteilnehmers (B) und/oder eine Belegung eines Kommunikationskanals (K1) zum zweiten Kommunikationsteilnehmer (B) festgestellt wird.

6. Verfahren nach Anspruch 1, **dadurch gekennzeichnet, dass** der erste Kommunikationsteilnehmer (A) wegen der Belegung des Kommunikationskanals (K1) durch das Telekommunikationsnetzwerk, insbesondere durch eine Vermittlungsstelle (SSP1, SSP2) aufgefordert wird, eine Nachricht zu sprechen, insbesondere den Namen, wonach die Nachricht dem zweiten Kommunikationsteilnehmer (B) zugespielt wird.

7. Verfahren nach einem der vorherigen Ansprüche, **dadurch gekennzeichnet, dass** der angerufene zweite Kommunikationsteilnehmer (B) während und/oder nach der Zuspielung der Nachricht den Anruf annimmt, insbesondere durch Drücken wenigstens einer Taste an seinem Kommunikationsgerät und/oder durch wenigstens einen Sprachbefehl.

8. Verfahren nach einem der vorherigen Ansprüche, **dadurch gekennzeichnet, dass** nach Beendigung der Belegung des Kommunikationskanals (K1) automatisch oder auf Wunsch des zweiten Kommunikationsteilnehmers (B) ein Anruf generiert wird zum ersten Kommunikationsteilnehmer (A), insbesondere an die gespeicherte Netzwerkkennung des ersten Kommunikationsteilnehmers (A).

9. Verfahren nach einem der vorherigen Ansprüche, **dadurch gekennzeichnet, dass** eine Belegung des Kommunikationskanals (K1) zum zweiten Kommunikationsteilnehmer (B) gegeben ist durch eine Kommunikation, die der zweite Kommunikationsteilnehmer (B) mit einem dritten Kommunikationsteilnehmer (C) oder einem Kommunikationsdienst durchführt.

10. Verfahren nach einem der vorherigen Ansprüche, **dadurch gekennzeichnet, dass** eine Belegung des Kommunikationskanals (K1) zum zweiten Kommunikationsteilnehmers (B) gegeben ist durch eine Kommunikation (K1), die der zweite Kommunikationsteilnehmer (B) mit der Datenbank (DB) seiner Mailbox zur Abfrage der Mailbox durchführt.

11. Kommunikationssystem umfassend ein Kommunikationsnetzwerk, **dadurch gekennzeichnet, dass** einem zweiten Kommunikationsteilnehmer (B) der Anruf eines ersten Kommunikationsteilnehmers (A) während der Belegung eines Kommunikationskanals (K1) zum zweiten Kommunikationsteilnehmer (B) signalisierbar ist durch eine Nachricht des ersten Kommunikationsteilnehmers (A).
